# EUROPÄISCHE PATENTSCHRIFT

(11) **EP 2 020 510 B1**
(45) Veröffentlichungstag und Bekanntmachung des Hinweises auf die Patenterteilung: **14.08.2013**
(21) Anmeldenummer: 08010427.6
(22) Anmeldetag: 09.06.2008
(51) Int. Cl.: F15B 1/02, B62D 5/06, F15B 21/04

(54) **Druckleitung zur fluidischen Verbindung einer Pumpe zu einem hydraulischen Stellaggregat in einem Kraftfahrzeug**
Pipe for fluid connection of a pump to a hydraulic actuator in a motor vehicle
Conduit sous pression pour liaison d'une pompe avec un vérin hydraulique dans un véhicule automobile

(30) Priorität: 01.08.2007 DE 102007036502
(43) Veröffentlichungstag der Anmeldung: 04.02.2009
(73) Patentinhaber: ThyssenKrupp Presta Aktiengesellschaft, 9492 Eschen (LI)
(72) Erfinder: Linzmaier, Kurt, 73650 Winterbach (DE); Breuning, Edwin, 73770 Denkendorf (DE)
(74) Vertreter: Lenzing Gerber Stute

(56) Entgegenhaltungen:
- WO-A1-2007/048458
- DE-A1- 10 015 051
- DE-A1- 10 229 062
- FR-A1- 2 829 534
- US-A- 4 691 797
- US-A1- 2006 008 356
- US-A1- 2006 201 734

## Beschreibung

### Stand der Technik

Bei hydraulischen Hilfskraftlenkungen werden über die Hydraulikpumpe vom Verbrennungsmotor des Fahrzeuges Schwingungen in den Hydraulikkreislauf eingebracht.

Auf der Drehzahl des Verbrennungsmotors liegt eine Drehschwingung, welche die Größe der Amplituden und Phasen der Drehschwingung zu einem Großteil beeinflusst. Die Drehschwingung entstehen durch die permanente Beschleunigung und das Abbremsen der Kurbelwelle bei jedem Kolbenhub. Weitere Einflüsse stammen aus dem Hydrauliksystem selbst.

Die oben beschriebenen Schwingungen werden im Leerlaufbetrieb direkt von der Hydraulikpumpe in hydraulische Schwingungen umgesetzt und in das Hydrauliksystem eingeleitet. Diese indirekt erzeugten Geräusche aus dem Antriebsstrang des Fahrzeugs werden in das Lenksystem eingebracht, welches als Verstärker und Übertrager des Geräusches in die Fahrgastzelle anzusehen ist.

Aus dem Stand der Technik sind Systeme zur Dämpfung hydraulischer Schwingungen bekannt. Wie aus der US 2006/0201734 A1 bekannt werden zur Verminderung der Geräusche in Rohrleitungen flexible Teilstücke eingesetzt, welche die Spannungsspitzen des Hydrauliksystems kompensieren sollen. Hierbei werden an die Druckleitungen Elemente angebracht, die an Ihrer Außenwand ein Material aufweisen, welches sensibel auf die Druckimpulse reagiert und entsprechend nachgibt. Somit kann die Amplitude abgeschwächt werden.

Bei der hier beschriebenen Lösung wird das Lenkgefühl nachteilig beeinflusst, da bei spontanen Lenkmanövern ebenfalls ein Teil der Energie absorbiert wird.

Aus der Offenlegungsschrift US 2006/008356 A1 ist ein hydraulisches System bekannt, bei dem über eine parallel geschaltete Leitung ein Kühlventilator angetrieben wird. Dabei ist durch ein elektromagnetisch gesteuertes Ventil das Verhältnis der Durchflussvolumen in den parallel geschalteten Leitungen geschaltet.

Die hier beschriebene Lösung dient zur regulierbaren Kühlung der hydraulischen Flüssigkeit. Eine explizite Dämpfung von hydraulischen Störfrequenzen ist nicht vorgesehen.

### Aufgabe der Erfindung

Es ist daher die Aufgabe der Erfindung ein Lenksystem bereitzustellen, bei dem die sekundär anfallenden Störfrequenzen kompensiert werden können, ohne Einbußen beim Lenkgefühl in Kauf nehmen zu müssen.

Weiterhin ist es die Aufgabe der Erfindung, die Zahl der zu verwendeten Bauteile möglichst gering zu halten

Diese Aufgabe wird von einer Lenkung mit den Merkmalen des Anspruchs 1 gelöst.

Weil die Druckleitung zwischen der Hydraulikpumpe und dem Servomotor zumindest abschnittweise in zwei hydraulisch parallel geschaltete Leitungen aufgetrennt wird, wobei die Leitungen eine unterschiedliche Laufzeit für Schall-, Druck-und Volumenwellen, insbesondere unterschiedliche Leitungslänge Δ l aufweisen, können sich bei geeigneter Abstimmung die Wellen durch Interferenz auslöschen.

Der Volumenstrom durch eine der parallelen Leitungen kann unterbunden werden, wenn in dieser Leitung eine innere Vorrichtung vorgesehen ist, die eine die Leitung in zwei getrennte Volumina aufteilende schwingfähige Membran aufweist.

Als besonders vorteilhafte Ausgestaltung der Erfindung ist anzusehen wenn die innere Vorrichtung zur Aufnahme der Membrane sich zwischen den parallel verlaufenden Hydraulikleitungen befindet.Die innere Vorrichtung zur Aufnahme der Membrane kann zwischen den Abzweigungen in die Hydraulikleitung integriert sein.

Die Leitungsanordnung mitden Druckleitungen und der inneren Vorrichtung zur Aufnahme der Membrane kann der externen Vorrichtung integriert sein, so dass die Montage vereinfacht wird und diese Vorrichtung als einzelnes Bauteil zugeliefert werden kann.

Eine weitere besonders vorteilhafte Ausführungsform ist es wenn die externe Vorrichtung, die die Leitungsanordnung umfasst, ein Ölkühler ist.

Es ist weiter vorteilhaft, wenn alle Hydraulikleitungen aus demselben Material gefertigt sind.

Die Funktion kann aber positiv beeinflusst werden, wenn die Hydraulikleitungen geeignete Unterschiede in Material und Oberflächenbeschaffenheit aufweisen.

Es können nahezu beliebig viele Hydraulikleitungen mit unterschiedlichen Längen in der Form wie die im Vorfeld beschriebene Druckleitungsanordnung angebracht sein.

Im Folgenden wird ein Ausführungsbeispiel der Erfindung anhand der Zeichnung beschrieben. Es zeigen:
- Fig.1:: eine an sich bekannte hydraulische Servolenkung;
- Fig. 2:: die Amplitude einer Störfrequenz;
- Fig. 3:: die von der Pumpe kommende Druckwelle v;
- Fig. 4:: eine Anbindung der ersten und der zweiten Hydraulikleitung; sowie
- Fig. 5:: eine Anbindung wie in Fig. 4 in anderer Ausführung.

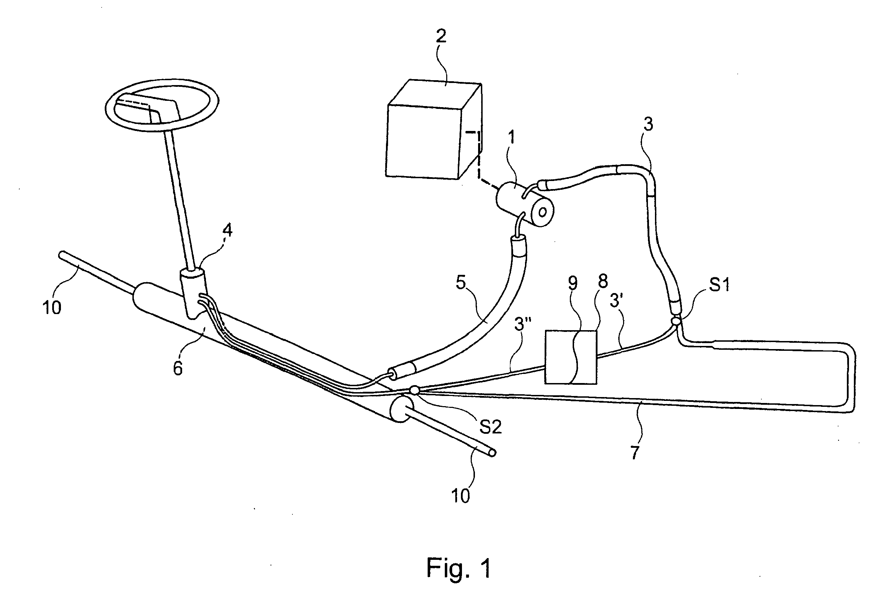

In der Fig.1 ist eine an sich bekannte hydraulische Servolenkung schematisch dargestellt. Die Lenkung umfasst eine Hydraulikpumpe 1, die über einen Verbrennungsmotor 2 angetrieben ist. Die Pumpe 1 ist über eine erste Hydraulikleitung 3 mit dem Eingang eines Servoventils 4 und einer zweiten Hydraulikleitung 5 mit dem Rücklauf des Servoventils 1 verbunden.

Das Servoventil 4 ist in bekannter Weise mit den Arbeitsräumen des Stellantriebes 6 verbunden. Der Stellantrieb betätigt in an sich bekannter Weise die Spurstangen 10.

Die erste Hydraulikleitung 3 ist an einem Punkt s1 mit einer dritten Hydraulikleitung 7 verbunden. Die erste Hydraulikleitung 3 ist mit einer inneren Vorrichtung 8 verbunden. Die innere Vorrichtung 8 ist mit dem zweiten Teil der ersten Hydraulikleitung 3 verbunden.

Die dritte Hydraulikleitung 7 ist an einem Punkt s2 mit der ersten Hydraulikleitung verbunden.

Die innere Vorrichtung 8 ist mit einer Membran 9 ausgestattet.

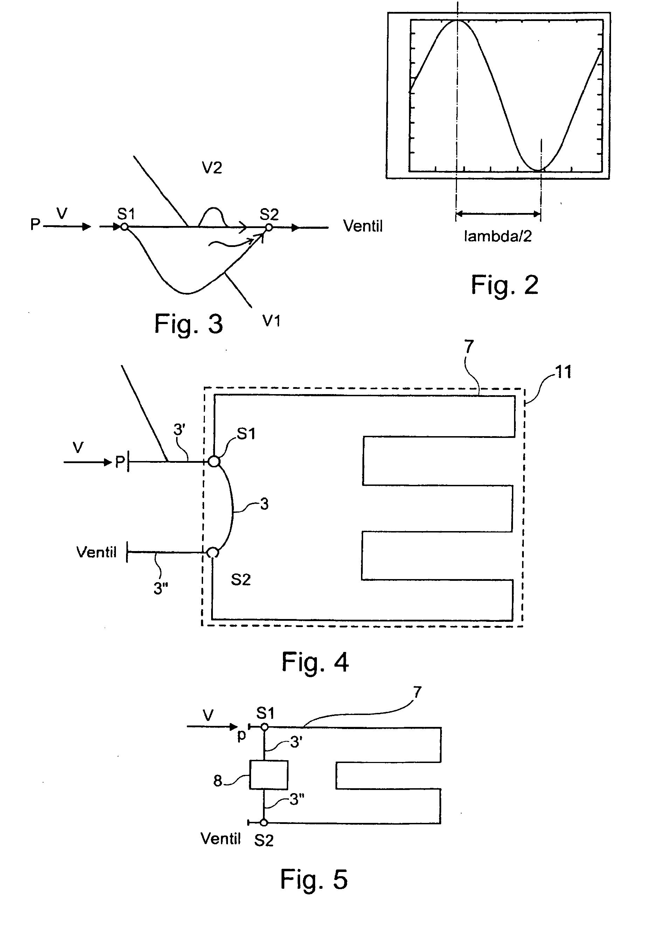

In der Fig. 2 ist die Amplitude der Störfrequenz dargestellt. λ /2 stellt die benötigte Rohrlänge der dritten Hydraulikleitung dar.

In der Fig. 3 ist die von der Pumpe kommende Druckwelle/Volumenstromwelle v dargestellt. Am Punkt s1 läuft die Druckwelle in die erste und dritte Hydraulikleitung 3,7, in der sich die Welle V in zwei Wellen V1, V2 mit unterschiedlicher Phase fortsetzt. Am Punkt s2 treffen die Wellen V1, V2 mit unterschiedlichen Phasen aufeinander.

In der Fig. 4 ist die erste Hydraulikleitung 3 mit der dritten Hydraulikleitung 7 verbunden.

Der Punkt s1 verbindet die erste Hydraulikleitung 3 mit der dritten Hydraulikleitung 7 und der Druckseite der Pumpe 1. Der Punkt s2 verbindet die erste Hydraulikleitung 3 und die dritte Hydraulikleitung 7 mit dem Servoventil 4. Die Leitungsanordnung der ersten Hydraulikleitung 3 und der dritten Hydraulikleitung 7 befindet sich in einer geeigneten externen Vorrichtung 11.

In der Fig. 5 ist die erste Hydraulikleitung 3 mit der dritten Hydraulikleitung 7 verbunden.

Der Punkt s1 verbindet die erste Hydraulikleitung 3 mit der dritten Hydraulikleitung 7 und der Druckseite der Pumpe 1. Die erste Hydraulikleitung 3 ist mit einer inneren Vorrichtung 8 verbunden. Die innere Vorrichtung 8 ist mit dem zweiten Teil 3'' der ersten Hydraulikleitung 3 verbunden. Der Punkt s2 verbindet die erste Hydraulikleitung 3 und die dritte Hydraulikleitung 7 mit dem Servoventil 4.

Bei einem hydraulisch unterstützten Lenksystem wird das Lenkmoment über die Lenkhandhabe in das Lenkventil 4 eingeleitet. Durch die Verdrehung des Lenkventils 4 werden die Hydraulikleitungen 3,7 mit Druck beaufschlagt, welcher von der Pumpe 1 erzeugt wird. Die Pumpe 1 kann vom Verbrennungsmotor 2 des Fahrzeugs angetrieben werden. In Abhängigkeit der Verdrehrichtung des Lenkventils 4 werden die Hydraulikleitungen 3,7 mit Druck beaufschlagt und der Servomotor führt eine Axialbewegung, bei der die Spurstangen betätigt werden, aus.

Durch den Aufbau bedingt werden mechanische Anregungen vom Verbrennungsmotor über die Hydraulikpumpe in das Lenksystem eingebracht.

Diese mechanische Anregung setzt sich in den Hydraulikleitungen 3, 3', 3'' und 7 als Druckschwingung V, V 1, V2 fort. Diese Druckschwingung V wandert wellenförmig durch die Hydraulikleitungen 3, 3', 3'' und 7 hindurch. Durch die Teilung der Hydraulikleitung 3 am Punkt s1 wird eine zweite Hydraulikleitung 7 parallel an der Hydraulikleitung entlang geführt.

Die beiden Widerstandsbeiwerte der Hydraulikleitungen 3', 7 können zusammen dem Widerstandsbeiwert der Hydraulikleitung 3 vor der Teilung am Punkt s1 entsprechen.

Die Länge der Leitung entspricht λ/2 der oben erwähnten Druckschwingung V.

λ/2 lässt sich anhand der Störfrequenz und der Schallgeschwindigkeit ermitteln (λ/2 = ½ * v/f)

Bevor die Hydraulikleitung 7 an dem Punkt s2 wieder in die ursprüngliche Hydraulikleitung 3, bzw. 3'' mündet, kann wahlweise eine innere Vorrichtung 8 zur Energieübertragung dazwischen geschaltet werden. In der Vorrichtung kann eine schwingfähige Membrane 9 hydraulisch eingespannt sein.

Vorzugsweise befindet sich die innere Vorrichtung 8 zwischen den Leitungsteilen der Hydraulikleitung 3'und 3''. Zur Funktion der hier dargestellten Lösung ist die innere Vorrichtung 8 nicht zwingend notwendig, verbessert aber die Wirkungsweise.

Dabei gilt, dass die Geräuschdämpfung für eine gegebene Wellenlänge λ optimal arbeitet, wenn sich die Längen der parallelen Rohrleitungen wie folgt verhalten:
Länge 3'+ 3''= Länge 7 - λ/2 3' + 3'' + λ/2 = 7

Durch die unterschiedlichen Längen der Hydraulikleitungen 3 und 7 entstehen verschiedene Weglängen der Druckschwingung V. Am Punkt s2 sollen sich die Druckschwingungen V1, V2 durch die unterschiedlichen Phasen kompensieren.

In einer bevorzugten Ausführnngsform können die Hydraulikleitungen 3, 3', 3'' und 7 in einer externen Vorrichtung 11 untergebracht sein. Bei der externen Vorrichtung 11 kann es sich um einen Ölkühler handeln. Selbstverständlich sind auch Varianten denkbar, bei denen nur ein Bauteil oder in anderer Kombination der oben angegebenen Hydraulikleitungen in der externen Vorrichtung 11 untergebracht sind.

In einer weiteren Ausführungsform können auch Hydraulikleitungen aus unterschiedlichen Materialien und/oder mit verschiedenen Oberflächen verwendet werden um eine Rohrlänge zu erhalten, die den Erfordernissen im Fahrzeug Rechnung trägt. Die Hydraulikleitungen können zur Schallminderung auch im Niederdruckteil des Hydrauliksystems eingesetzt werden.

### Bezugszeichenliste

1. Pumpe
2. Verbrennungsmotor
3. erste Hydraulikleitung
4. Servoventil
5. zweite Hydraulikleitung
6. hydraulischer Stellantrieb
7. dritte Hydraulikleitung
8. innere Vorrichtung zur Energieübertragung
9. Membrane
10.Spurstange
11.ext. Vorrichtung zur Aufnahme der Leitungsanordnung
V Druckschwingung
V1 erste Druckschwingung
V2 zweite Druckschwingung
Vₛ Schallgeschwindigkeit
s1 erste Abzweigstelle
s2 zweite Abzweigstelle
f Störfrequenz

## Patentansprüche

1. Hydraulikanordnung für ein Fahrzeug, insbesondere für ein Kraftfahrzeug, mit einem Servomotor (6), der über eine Hydraulikpumpe (1) und Druckleitungen (3, 3', 3", 7) mit Hydraulikfluid versorgt wird, wobei die Druckleitung zwischen der Hydraulikpumpe und dem Servomotor zumindest abschnittweise in zwei hydraulisch parallel geschaltete Leitungen (3', 3", 7) aufgetrennt wird, wobei die Leitungen (3', 3", 7) unterschiedliche Laufzeiten der Druckwelle oder Volumenwelle aufweisen, **dadurch gekennzeichnet, dass** in einer der Leitungen eine innere Vorrichtung (8) vorgesehen ist, die eine schwingfähige Membran aufweist.

2. Hydraulikanordnung nach Anspruch 1, **dadurch gekennzeichnet, dass** die Leitungen (3', 3", 7) unterschiedliche Leitungslänge (Δ1) aufweisen.

3. Hydraulikanordnung nach Anspruch 1, **dadurch gekennzeichnet, dass** die innere Vorrichtung (8) sich zwischen den Hydraulikleitungen (3') und (3") befindet.

4. Hydraulikanordnung nach Anspruch 1, **dadurch gekennzeichnet, dass** die innere Vorrichtung (8) nach der Abzweigung (S1), aber vor der Abzweigung (S2) in die Hydraulikleitung (3) integriert ist.

5. Hydraulikanordnung nach Anspruch 1, **dadurch gekennzeichnet, dass** die Leitungsanordnung bestehend aus den Leitungen (3', 3", 7) und die innere Vorrichtung (8) in der externen Vorrichtung (11) integriert sind.

6. Hydraulikanordnung nach Anspruch 1, **dadurch gekennzeichnet, dass** die externe Vorrichtung (11) ein Ölkühler ist.

7. Hydraulikanordnung nach Anspruch 1, **dadurch gekennzeichnet, dass** alle Hydraulikleitungen aus demselben Material gefertigt sind.

8. Hydraulikanordnung nach Anspruch 1, **dadurch gekennzeichnet, dass** die Hydraulikleitungen Unterschiede in Material und Oberflächenbeschaffenheit aufweisen.

9. Hydraulikanordnung nach Anspruch 9, **dadurch gekennzeichnet dass** durch die Unterschiede in Material und/oder Oberflächenbeschaffenheit eine Unterschiedliche Schallgeschwindigkeit erreicht wird.

10. Hydraulikanordnung nach Anspruch 1, **dadurch gekennzeichnet, dass** beliebig viele Hydraulikleitungen mit unterschiedlichen Längen in der Form wie Hydraulikleitung (7) angebracht sein können.

## Claims

1. Hydraulic arrangement for a vehicle, in particular for a motor vehicle with a servo motor (6), which is supplied with hydraulic fluid via a hydraulic pump (1) and pressure lines (3, 3', 3",7), wherein the pressure line between the hydraulic pump and the servo motor is divided at least in sections into two lines (3', 3", 7) that are hydraulically parallel to each other, wherein the lines (3', 3", 7) exhibit pressure wave or bulk wave durations that are different, **characterised in that** an inner device (8) with an oscillating membrane is provided in one of the lines.

2. Hydraulic arrangement according to claim 1, **characterised in that** the lines (3', 3", 7) have different lengths (Δ1).

3. Hydraulic arrangement according to claim 1, **characterised in that** the inner device (8) is located between the hydraulic lines (3') and (3').

4. Hydraulic arrangement according to claim 1, **characterised in that** the inner device (8) is integrated into hydraulic line (3) downstream of the junction (S1), but upstream of the junction (S2).

5. Hydraulic arrangement according to claim 1, **characterised in that** the line arrangement consisting of the lines (3', 3", 7) and the inner device (8) are integrated into the external device (11).

6. Hydraulic arrangement according to claim 1, **characterised in that** the external device (11) is an oil cooler.

7. Hydraulic arrangement according to claim 1, **characterised in that** all hydraulic lines are made of the same material.

8. Hydraulic arrangement according to claim 1, **characterised in that** the hydraulic lines exhibit differences in material and surface finish.

9. Hydraulic arrangement according to claim 9, **characterised in that** different sonic velocity is achieved through the differences in material and/or surface finish.

10. Hydraulic arrangement according to claim 1, **characterised in that** any number of hydraulic lines of different lengths can be applied in the form such as hydraulic line (7).

## Revendications

1. Agencement hydraulique pour un véhicule, notamment pour un véhicule automobile, comprenant un servomoteur (6) ou vérin d'assistance, qui est alimenté en fluide hydraulique par l'intermédiaire d'une pompe hydraulique (1) et de conduites de pression (3, 3', 3", 7), agencement dans lequel la conduite de pression entre la pompe hydraulique et le servomoteur est scindée, au moins par secteurs, en deux conduites (3', 3", 7) montées en parallèle sur le plan hydraulique, les conduites (3', 3", 7) présentant des temps de parcours différents de l'onde de pression ou de l'onde de volume, **caractérisé en ce que** dans l'une des conduites est prévu un dispositif interne (8), qui comprend une membrane susceptible d'osciller.

2. Agencement hydraulique selon la revendication 1, **caractérisé en ce que** les conduites (3', 3", 7) présentent des longueurs de conduite (Δ1) différentes.

3. Agencement hydraulique selon la revendication 1, **caractérisé en ce que** le dispositif interne (8) se trouve entre les conduites hydrauliques (3') et (3").

4. Agencement hydraulique selon la revendication 1, **caractérisé en ce que** le dispositif interne (8) est intégré à la conduite hydraulique (3), après l'embranchement de dérivation (S1), mais avant l'embranchement de dérivation (S2).

5. Agencement hydraulique selon la revendication 1, **caractérisé en ce que** l'agencement de conduites constitué par les conduites (3', 3" , 7), et le dispositif interne (8), sont intégrés au dispositif externe (11).

6. Agencement hydraulique selon la revendication 1, **caractérisé en ce que** le dispositif externe (11) est un radiateur à huile.

7. Agencement hydraulique selon la revendication 1, **caractérisé en ce que** toutes les conduites hydrauliques sont fabriquées en un même matériau.

8. Agencement hydraulique selon la revendication 1, **caractérisé en ce que** les conduites hydrauliques présentent des différences quant au matériau et à la structure ou qualité d'état de surface.

9. Agencement hydraulique selon la revendication 9, **caractérisé en ce que** grâce aux différences de matériau et/ou de structure ou qualité d'état de surface, on obtient une vitesse sonique différente.

10. Agencement hydraulique selon la revendication 1, **caractérisé en ce qu'**il est possible de prévoir un nombre quelconque de conduites hydrauliques de longueurs différentes, sous une forme comme la conduite hydraulique (7).
